Europäisches Patentamt

European Patent Office

Office européen des brevets

(19)

(11) Publication number: **0 402 991**

**A1**

# EUROPEAN PATENT APPLICATION

(12)

(21) Application number: **90201454.7**

(22) Date of filing: **07.06.90**

(51) Int. Cl.⁵: **C08F 236/12, C09J 109/04, C08J 5/06, C08L 21/00**

(30) Priority: **12.06.89 US 365104**

(43) Date of publication of application:
**19.12.90 Bulletin 90/51**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Tsai, Thomas C.H.**
**3816 Lake LaBerge Court**
**Baton Rouge, Louisiana 70816(US)**

(54) **Improved adhesive latex.**

(57) The invention relates to a new terpolymer based on acrylonitril, butadiene and vinylpyridine, a process for preparing said terpolymer and an adhesive comprising said terpolymer. The new terpolymer of the present invention has been found to be particularly useful in establishing a secure bonding relationship between fiber cords and acrylonitrile-butadiene rubbers (NBR). The terpolymer of the present invention can be blended with resorcinol-aldehyde latices or can be blended with NBR rubber which is then reinforced with fiber cord.

EP 0 402 991 A1

## IMPROVED ADHESIVE LATEX

### BACKGROUND OF THE INVENTION

This invention relates to a composition of matter, comprising a terpolymer based on acrylonitril and butadiene, a latex comprising said terpolymer and a method for making the same. More particularly, this invention relates to an improved adhesive latex suitable for use in binding fiber cords to a rubber stock, more specifically NBR stock, such as in the manufacture of belts or tires.

It is well known in the manufacture of tires, drive belts and like rubber or elastomeric products to employ fiber cords to reinforce the rubber or elastomer stock of a tire or a belt. A variety of fibers have been used as reinforcement, including synthetic organic fibers such as polyester fibers, polyamide or nylon fibers and the like as well as glass fibers and steel fibers. One of the problems which has been incurred from the first use of such fibers in the reinforcement of rubber products is the tendency of the fibers to tear away from the rubber stock when subjected to flexure. A variety of techniques have been used, therefore, in an attempt to establish a secure bonding relationship between cords of such fibers and the rubber stock in which the fibers are distributed as reinforcement.

One of the most common techniques to bond such cords to rubber stock involves the use of an adhesive which is used to impregnate bundles of fibers, commonly referred to as cords, to maintain structural integrity during use. Adhesive compositions used for that purpose have included styrene-butadiene rubber or "SBR", acrylonitrile-butadiene rubber or "NBR" and latices made from those rubbers. One common adhesive employed in bonding such cords to rubbers are blends of latices formed from resorcinol and a lower aliphatic aldehyde (RFL) such as formaldehyde with SBR and NBR rubbers. While such adhesives have been employed, they do not always exhibit optimum adhesive and tack properties needed for high performance tire or belt products employing oil-resistant NBR stocks.

It is one object of the invention to provide an NBR-based terpolymer. Another object is to provide a latex based on said terpolymer, which has improved adhesive and tack properties for binding rubber stock, especially NBR stocks.

It is another object of the invention to provide a method of making said terpolymer and to provide a method for making a latex with improved adhesive and tack properties.

Other objects, advantages and novel features of the instant invention will become apparent upon reading the specification herein.

### SUMMARY OF THE INVENTION

In accordance with the invention, terpolymer rubbers and novel latex compositions of those rubbers are provided having improved adhesive and tack properties. The rubbers of the invention comprise a ter-polymer of acrylonitrile, butadiene, and vinyl pyridine. The terpolymer can be prepared by polymerization in an aqueous emulsion or dispersion of monomeric materials which produce latices of synthetic polymer.

The latex so formed can then be used to formulate resorcinol-aldehyde latices (RFL) comprising an aqueous emulsion of the reaction product of the terpolymer with a resorcinol-aldehyde resin.
These RFL compositions exhibit improved adhesion and tack properties over prior art synthetic rubber latices, especially in an NBR stock.

The terpolymer latex may also be subsequently coagulated to form a dry, solid terpolymer which can then be compounded with the NBR stock.

### DETAILED DESCRIPTION OF THE INVENTION

A rubber and a rubber latex are provided comprising a terpolymer of acrylonitrile, butadiene, and vinyl pyridine. The vinyl pyridine may be advantageously selected from the group of 2-vinyl pyridine, 2-methyl 5-vinyl pyridine, and 4-vinylpyridine, and is preferably 4-vinyl pyridine. The butadiene is present in the amount of about 50-84% by weight. The acrylonitrile is present in the amount of about 15-49% by weight, preferably about 25-35% by weight. The vinyl pyridine is present in the amount of about 1-15% by weight, and preferably about 2-7% by weight.

The terpolymers of the present invention can be prepared by the same techniques employed in the prior art in the preparation of acrylonitrile-butadiene copolymers and notably the technique of emulsion polymerization. By this technique, an aqueous emulsion of the monomers is provided, and polymerization occurs to produce a dispersion of the polymerized rubber in water (a latex). Emulsifiers are used to disperse the monomer reactants and the polymerized rubber. A molecular weight modifier is normally used as a chain terminator or chain-transfer agent to regulate the molecular weight of the resulting polymer and prevent gel formation.

The free radical polymerization can be initiated by a hydroperoxide-sodium formaldehyde sulfoxylate redox reaction catalyzed by an iron complex. The polymerization is generally carried out at temperatures below 60°C in order to prevent excessive cross-linking. It is further known to "shortstop" the reaction when the polymerization has proceeded as far as desired by addition of a free radical scavenger such as hydroquinone or alkylamines. The latex can be used as produced or be coagulated to recover the terpolymer.

The terpolymer of the instant invention is preferably prepared by emulsion polymerization in the form of an aqueous latex wherein the polymerization reaction is initiated by a simultaneous oxidation-reduction reaction. Generally, an aqueous solution is provided containing an electrolyte, an emulsifier, a reducing agent and a chelating agent. An activator, such as iron sulfate, is added to the solution. Additional emulsifiers are mixed in, along with a molecular weight modifier. Then, vinylpyridine, acrylonitrile, and butadiene are added to the solution in appropriate pre-determined quantities and mixed thoroughly. The solution is deaerated and maintained under a nitrogen blanket. An oxidizing agent is added which reacts with the reducing agent to generate a free radical that initiates the polymerization reaction. The polymerization reaction is allowed to run to the extent desired. The reaction is terminated by the addition of a "short stop".

The resulting acrylonitrile-butadiene vinyl-pyridine terpolymer latex can be coagulated, and the coagulant used in the compounding of rubber stocks. It has been found that rubber stocks which have been compounded with the terpolymer of the present invention exhibit good adhesive and tack properties. The terpolymer latex can be used as such, or contacted with a resorcinol-aldehyde resin, typically a resorcinol-formaldehyde resin, to form a resorcinol-formaldehyde latex. This latex can be used to impregnate a cord for use as a rubber reinforcement, and preferably in an NBR reinforced product. Alternatively, the terpolymer of the present invention can be dissolved in organic solvents to form an adhesive rubber cement in accordance with known techniques.

Where the terpolymer or the latex of the terpolymer of the present invention is blended with a resorcinol-aldehyde resin, preferably also in the form of a latex, use is preferably made of a well-known class of latices formed by reaction of resorcinol with a lower aliphatic aldehyde containing 1-4 carbon atoms and preferably formaldehyde. Such resins are usually prepared by the acid catalyzed reaction of resorcinol and aldehyde with a molar excess of aldehyde at a pH above about 3.

Without limiting the present invention as to theory, it is believed that the resorcinol-formaldehyde resin chemically bonds to the acrylonitrile-butadiene-vinyl pyridine terpolymer to form a cross-linked chemical network which is at least in part responsible for the effectiveness of adhesives formulated in accordance with the present invention.

When blends of the acrylonitrile-butadiene-vinyl pyridine terpolymer with the resorcinol formaldehyde resin are employed as adhesives, it is generally preferred that such adhesive compositions be formulated with 10-25% by weight of the terpolymer of this invention, 1.5-4% by weight of the resorcinolaldehyde resin and 0.5-1% by weight of aldehyde, using an NH4OH/NaOH aqueous solution having a pH above 12, and preferably 12-13. It has been found that adhesive compositions formulated as described provide excellent bonding relationships between cords impregnated with the adhesive and rubber stocks' in the manufacture of fiber reinforced products.

Having described the basic concepts of the present invention, reference is now made to the following examples which are provided by way of illustration, and not by way of limitation, of the practice of the present invention.

EXAMPLE 1

Preparation of NBR-4VP Terpolymer Latex

A pigment solution was prepared of 0.6 g of potassium chloride, 0.2 g of sodium salts of polymerized alkyl naphthalene sulfonic acid (sold under the tradename Lomar® LS, by Rohm and Haas), 0.1 g sodium formaldehyde sulfoxylate and 0.04 g Na-EDTA in 100 ml water. The pigment solution was blended into 222 ml water in a suitable pressure vessel. To the resulting solution was added 0.8 ml activator solution containing 0.016 g $FeSO_4.7H_2O$ and 0.0285 g Na-EDTA. To this solution were added emulsifiers in the form of 60 g aqueous solution of 10% alkylated diphenyl oxide sodium disulfonate (sold under the tradename Dowfax$^R$ 2A1 by Dow Chemical Company) and 20 g of aqueous solution of potassium soap of rosin acid. A molecular weight modifier was added in the form of 2.07 g of 30% t-dodecyl mercaptan in toluene. To this prepared solution were added the three monomers to be polymerized, namely, 10 g of 4-vinyl pyridine (hereinafter 4VP), 54 g of acrylonitrile and 150.5 g of butadiene. The pressure vessel was capped with a nitrile rubber seal, deaerated, and filled with 0.14 MPa nitrogen gas. Prior to polymerization, a 5.0 ml portion of 1.2% aqueous solution of sodium hydrosulfite was injected to the vessel to act as an oxygen scavenger. The vessel was shaken for 20-30 minutes. Then the reaction was initiated by the addition of 2.4 g of a 5% toluene solution of paramenthane hydroperoxide.

This oxidation agent reacted with the sodium formaldehyde sulfoxylate reducing agent to form a redox system which initiated the polymerization of the three monomers. The polymerization reaction was carried out at 10°C for 4½-5 hours. In order to prevent polymer crosslinking, the polymerization was "short-stopped" with 20 ml of a solution of 1.0% sodium diethyl dithiocarbamate and 1.0% diethyl hydroxy amine. The resulting reaction product (with about 80-85% monomer conversion) was a stable latex of acrylonitrile-butadiene-vinyl pyridine terpolymer. Residual monomers were removed by steam distillation.

EXAMPLE 2

Preparation of NBR-2VP Terpolymer Latex

An acrylonitrile-butadiene-vinyl pyridine terpolymer latex is prepared in accordance with the procedures of Example 1, except that 10 g of 2-vinyl pyridine is substituted for the 10 g of 4-vinyl pyridine.

EXAMPLE 3

Preparation of NBR-MVP Terpolymer Latex

An acrylonitrile-butadiene-vinyl pyridine terpolymer latex was prepared in accordance with the procedures of Example 1, except that 10 g of 2-methyl-5-vinyl pyridine (hereinafter MVP) were substituted for the 10 g of 4-vinyl pyridine.

EXAMPLE 4

Preparation of 4VP Resorcinol-Formaldehyde Latex (4VP-RFL)

To 41.2 parts water were added 0.1 parts NaOH, 0.4 parts concentrated ammonium hydroxide, 3.3 parts resorcinol-formaldehyde resin, 35.8 parts of the latex of Example 1, 1.7 parts of 37% formaldehyde and an additional 17.5 parts water.

The mixture was blended at ambient temperature and pressure, then aged for four hours to overnight. The resulting resorcinol formaldehyde latex (RFL) provided improved adhesion and tack properties for binding fiber cord and rubber stock.

EXAMPLE 5

Preparation of MVP Resorcinol Formaldehyde Latex (MVP-RFL)

4

An RFL was prepared according to the procedure of Example 4, except that the latex of Example 3 was substituted for the latex of Example 1.

EXAMPLE 6

Preparation of Compounded Rubber Stock

The acrylonitrile-butadiene vinyl pyridine terpolymer latex of Example 1 was coagulated with 0.5 parts per 100 parts rubber of diaryl-p-phenylenediamine and 4.5 parts per 100 parts rubber of calcium chloride. The crumbs from coagulation were dried in a convection oven overnight at 70°C. A 34.5 g portion of the resulting coagulated polymer was compounded in a Brabender mixer with a blend of 24.15 g carbon black and 3.45 g tetraethyleneglycol di-2-ethylhexanoate plasticizing agent, 3.4 g silica, 2.9 g of a processing aid comprising 0.51 g of powdered low molecular weight polyethylene, 0.34 g of diaryl-p-phenylene-diamine antioxidant, 0.34 g of the low temperature product of diphenylamine and the acetone as antioxidant and 1.71 g of zinc oxide curing accelerator, 1.7 g phenol resin plasticizer, 0.21 g of oiled sulfur curing agent, 0.55 g Sulfasan$^R$ (Monsanto Co., Wilmington, Delaware) curing agent and 0.52 g Santocure$^R$ NS (Monsanto Co., Wilmington, Delaware) curing agent. The resulting compounded rubber stock was milled to a thickness of 3 mm and cut into 5 cm width strips and wrapped with polyethylene film for later use.

The RFL of Example 4 and the rubber stock of Example 6 were evaluated for improved tack properties. Untreated polyester tapes and polyester tapes treated with isocyanate were coated with the 4VP-RFL of Example 4 by dipping in the 4VP-RFL, curing in an oven at 195-205°C for 45 seconds, and quickly removing from the oven and cooling to room temperature. The same procedure was also used to coat treated and untreated tapes with the MVP-RFL of Example 5. In addition, some of the isocyanate-treated coated tapes were further coated with an adhesive cement prepared by dissolving a portion of the 4VP-RFL of Example 4 in a 90:10 toluene:methyl ethyl ketone mixture to a 17.5% concentration. The tapes were coated by dipping in the adhesive cement, drying in an oven at 100°C, and cooling to room temperature.

The tack values of the 4VP-RFL, MVP-RFL, and adhesive cement were evaluated by pressing each of the above-described tapes to the rubber stock strips of Example 6 at 0.2 MPa for 5 minutes at room temperature, then peeling the tapes off with a peel tester. The results are set forth in Table I below:

TABLE I

| TACK VALUES | | | |
|---|---|---|---|
| Tape Treatment | RFL-Type | Cement Coating | Tack (lbs/in) |
| Untreated | none | none | 0 |
| Isocyanate | none | none | 0 - 0.2 |
| Untreated | 4VP | none | 2.2 - 2.9 |
| Isocyanate | 4VP | none | 2.6 - 5.0 |
| Untreated | MVP | none | 2.0 - 3.3 |
| Isocyanate | MVP | none | 1.8 - 4.4 |
| Isocyanate | 4VP | yes | >5.0* |
| Isocyanate | MVP | yes | 4.5 - 5.0 |

* This tape exhibited cohesive failure, indicating that the coating was stronger than the tape itself.

As may be seen, the combination of 4VP-RFL and adhesive cement coatings increased the tack value of isocyanate-treated tape from 0 - 0.2 to >5.0 lbs/in.

Further tests were done to evaluate the tack values of the RFL formulations of the instant invention in comparison with acrylonitrile-butadiene copolymer RFL formulations of the prior art, and also to evaluate the effect of the type of rubber stock on the tack value measurements. A "prior art" latex was made in accordance with the procedure set forth in Examples 1 and 4, except that no vinyl pyridine termonomer was

5

used. Polyester tapes, both untreated and treated with isocyanate, were coated with this RFL by the procedure described above. In addition, two compounded rubber stocks were made by the procedure set forth in Example 6 above, wherein the terpolymers included 4 - 5% 4-vinyl pyridine and about 4% 2-methyl-5-vinyl pyridine, respectively. Other NBR stock tested include a commercial NBR with no vinyl-pyridine (NYsyn[R] 33-5 by Copolymer Rubber and Chemical Corp., Baton Rouge, Louisiana), and three non commercial NBR's: a 20-5 type, a NYsyn-blak[R] (by Copolymer Rubber and Chemical Corp., Baton Rouge, Louisiana) type, and one containing 5% polysulfide. These six rubber stocks were each compounded and made into 3 x 50 mm strips described in Example 6. The tack values of the novel NBR-vinyl pyridine compounds of the instant invention were measured by pressing the coated tapes against the rubber stock strips, and peeling the tapes with a peel tester as described above. The results are set forth in Table II (in units of grams per inch).

## TABLE II

| TACK VALUES | | | | | | |
|---|---|---|---|---|---|---|
| RFL TYPE | PRIOR ART NBR | | NBR-4VP | NBR-MVP | | |
| Rubber Stock | Tape | | Tape | | Tape | |
| | Untreated | Isocyanate | Untreated | Isocyanate | Untreated | Isocyanate |
| NBR-4VP | 1,150 | 1,200 | 450 | 1,850* | 1,600 | 1,200* |
| NBR-MVP | 600 | 600 | 1,350* | 1,250 | 1,050* | 1,800* |
| NBR (Commercial) | 400 | 100 | 900* | 850 | 1,350* | 1,050* |
| NBR (20-5 type) | 0 | 1,250 | 1,000* | 900* | 1,350 | 1,250 |
| NBR (NY Syn Blak) | 0 | 0 | 0 | 1,350 | 0 | 200 |
| NBR (Polysulfide) | 900 | 800 | 1,150* | 1,100* | 250 | 1,000 |

* Sample exhibited cohesive failure

From Table II it may be seen that the tapes with the greatest tack are isocyanate-treated tapes coated with the NBR-4VP resorcinol-formaldehyde latex according to the invention. The rubber stocks with the greatest tack are those compounded of the NBR-4VP rubber according to the invention.

The adhesion of the compositions according to the invention was also evaluated. The tapes coated with prior art NBR, NBR with 4.5% 4-VP, and NBR with about 4% MVP were further coated with the 4VP-RFL adhesive cement described above. These tapes were pressed at 34.5 MPa against strips of selected rubber stocks of Table II and cured for 20 minutes. The cured strips were then peeled with an Instron tester. The results (in units of pounds per inch) are set forth in Table III.

## TABLE III

| ADHESIVE VALUES | | | | | | |
|---|---|---|---|---|---|---|
| RFL TYPE | PRIOR ART NBR | | NBR-4VP | | NBR-MVP | |
| Rubber Stock | Tape | | Tape | | Tape | |
| | Untreated | Isocyanate | Untreated | Isocyanate | Untreated | Isocyanate |
| NBR-4VP | 4 | 26 | 5 | 40 | 8 | 32 |
| NBR-MVP | 5 | 18 | 10 | 34 | 4 | 42 |
| NBR (NY syn-blak) | 4 | 12 | 5 | 26 | 6 | 18 |

From Table III it may be seen that the tapes with the adhesive values are isocyanate-treated tapes coated with the NBR-4VP resorcinol formaldehyde latex and NBR-4VP adhesive cement. The rubber stock with the greatest adhesive value is that prepared from NBR-4VP compounded rubber.

Additional embodiments of the instant invention are illustrated by the following examples.

EP 0 402 991 A1

EXAMPLE 7

Preparation of NBR-2VP Terpolymer Latex

An acrylonitrile-butadiene-vinyl pyridine terpolymer latex was prepared in accordance with the procedures of Example 1, but with the following substitutions:
(a) the aqueous solutions of alkylated diphenyl oxide sodium disulfonate and potassium soap of rosin acid, used as emulsifiers, were replaced with 80 g of a 10% aqueous solution of the potassium soap of a 70/30 mixture of rosin acid and fatty acids.
(b) the amount of 30% t-dodecyl mercaptan in toluene, used as a molecular weight-modifier, was increased from 2.07 g to 2.7 g.
(c) 10 g 2-vinylpyridine were used.
(d) 40 g acrylonitrile were used.
(e) 160 g butadiene were used.
Furthermore, the acrylonitrile was added incrementally, such that 45% was added initially, 35% was added after 40% conversion of the reaction mixture to terpolymer, and 20% was added after 60% conversion of the reaction mixture to ter-polymer.

EXAMPLE 8

Preparation of NBR-2VP Terpolymer Latex

An acrylonitrile-butadiene -vinyl pyridine terpolymer latex was prepared in accordance with the procedures of Example 1, but with the following substitutions:
(a) 2.1 g 30% t-dodecyl mercaptan in toluene were used as a molecular weight modifier.
(b) 10 g 2-vinyl pyridine were used.
(c) 146 g butadiene were used.

EXAMPLE 9

Preparation of NBR-4VP Terpolymer Latex

An acrylonitrile-butadiene-vinyl pyridine terpolymer latex was prepared in accordance with the procedures of Example 1, but with the following substitutions:
(a) The aqueous solutions of alkylated diphenyl oxide sodium disulfonate and potassium soap of rosin acid, used as emulsifiers, were replaced with 80 g dodecylbenzene sulfonate -$SO_3Na$.
(b) 2.1 g 30% t-dodecyl mercaptan in toluene were used as a molecular weight modifier.
(c) 146 g butadiene were used.

COMPARATIVE EXPERIMENT A

Preparation of Prior Art-Type NBR Copolymer Latex

An acrylonitrile-butadiene copolymer latex was prepared in accordance with the procedures of Example 1, but with the following substitutions and modifications:
(a) The aqueous solutions of alkylated diphenyl oxide sodium disulfonate and potassium soap of rosin acid were replaced with 80 g of a 10% aqueous solution of a 30/70 mixture of rosin acid and fatty acid.
(b) 2.7 g 30% t-dodecyl mercaptan in toluene were used.
(c) 40 g acrylonitrile were used, and were added incrementally as in Example 7.
(d) 160 g butadiene were used.
(e) no vinylpyridine was used.

7

### EXAMPLES 10-13

#### Preparation of RFL Latices

The latices of Examples 7-9, and comparative experiment A, respectively, were used to prepare resorcinol formaldehyde latices by the procedure described in Example 4.

### EXAMPLES 14-17

#### Addition of Wetting Agent to RFL Latices

To each of the RFL latices of examples 10-13 was added a wetting agent, sold under the name Aquiwet[R] 1186A and available from Diamond Shamrock, in the amount of 0.2 parts per hundred parts of rubber.

The RFL latices of examples 10-17 were coated on isocyanate polyester tapes. These samples were tested for tack and adhesion by the same methods reflected in Tables II and III above. The results are reflected in Table IV below.

TABLE IV

| Example | Type VP | Wetting Agent | Tack (lb/in) | Adhesion (lb/in) |
|---------|---------|---------------|--------------|------------------|
| 10 | 2-VP | no | 3.6 | 29 |
| 14 | 2-VP | yes | 5.1 | 33 |
| 11 | 2-VP | no | 5.8 | 34 |
| 15 | 2-VP | yes | 7.8 | 50 |
| 12 | 4-VP | no | 4.7 | 51 |
| 13 | none | no | 2.5 | 17 |
| 17 | none | yes | 2.3 | 10 |

A comparison of examples 11 and 12 shows that 2-VP can be at least as effective as 4-VP in increasing tack, relative to prior art NBR copolymers. A comparison of Examples 11 and 15 with Examples 10 and 14 shows that sulfonated emulsifiers are more effective in increasing tack. Comparing the examples with and without the wetting agent shows that the wetting agent facilitates the effectiveness of the vinyl pyridine in increasing tack.

The foregoing description of the invention and the examples are intended merely to illustrate useful embodiments of the invention, and are not intended to limit the scope of the invention as stated in the appended claims. It is expected that one skilled in the art will recognize that other embodiments can be made within the spirit of the invention disclosed and claimed herein.

## Claims

1. A composition of matter comprising a terpolymer of acrylonitrile, butadiene, and a vinyl pyridine.

2. The composition of matter of claim 1 wherein the vinyl pyridine is selected from the group consisting of 2-vinyl pyridine, 4-vinyl pyridine, and 2-methyl-5-vinyl pyridine.

3. The composition of matter of claim 2 wherein the butadiene is present in the amount of about 50-80% by weight, the acrylonitrile is present in the amount of about 15-50% by weight, and the vinyl pyridine is present in the amount of about 1-15% by weight.

4. The composition of matter of claim 3 wherein the acrylonitrile is present in the amount of about 25-35% by weight, and the vinyl pyridine is present in the amount of about 4-7% by weight.

5. A latex comprising a dispersion in water of a terpolymer according to anyone of claims 1-4.

6. Process for preparing an acrylonitrile-butadiene-vinylpyridine terpolymer comprising bringing together

8

EP 0 402 991 A1

(a) water
(b) one or more emulsifying agents
(c) a molecular weight modifier
(d) a polymerization initiator
(e) acrylonitrile,
(f) butadiene, and
(g) vinyl pyridine,
wherein the acrylonitrile, butadiene, and vinyl pyridine are polymerized to a terpolymer emulsified in the latex.

7. A process according to claim 6 wherein the vinyl pyridine is selected from the group consisting of 2-vinyl pyridine, 4-vinyl pyridine, and 2-methyl-5-vinyl pyridine.

8. A process according to claim 6 wherein the butadiene, acrylonitrile, and vinyl pyridine are present in the relative proportions of about 50-85 parts by weight, about 15-50 parts by weight, and about 1-15 parts by weight respectively.

9. A process according to claim 8 wherein the butadiene, acrylonitrile, and vinyl pyridine are present in the relative proportions of about 50-85 parts by weight, about 25-35 parts by weight, and about 4-7 parts by weight, respectively.

10. A process according to anyone of claims 6-9 wherein the emulsified terpolymer is further contacted with a resorcinol-aldehyde resin to form a resorcinol-aldehyde latex.

11. A process according to claim 10 wherein the emulsified terpolymer is further reacted with a resorcinol-formaldehyde resin to form a resorcinol-formaldehyde latex.

12. A process according to claim 6, wherein the acrylonitrile is added by pre-determined increments over the course of the polymerization reaction.

13. A process according to claim 12, wherein the acrylonitrile required for the polymerization is added in increments of 40-50% of the total amount of acrylonitril at the start of the polymerization reaction, 30-40% after about 40% conversion, and the remainder after about 60% conversion.

14. An adhesive composition comprising a terpolymer of acrylonitrile, butadiene and vinyl pyridine contacted with a resorcinol-aldehyde resin.

15. The adhesive of claim 14 wherein the terpolymer constitutes between 10-25% by weight of the adhesive, and the resorcinol-aldehyde resin constitutes from about 1.5-4% by weight of the composition.

16. An impregnated cord for use in reinforcing fiber reinforced products comprising a fiber cord and, as an impregnant in such cord, the adhesive composition according to claim 14.

17. A cord as defined in claim 16 wherein the fibers are polyester fibers.

9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 569 963 (H. HISAKI et al.) * Claim 1; column 2, line 22 * | 1-17 | C 08 F 236/12 C 09 J 109/04 C 08 J 5/06 C 08 L 21/00 |
| X | DATABASE CHEMICAL ABSTRACTS, (HOST:STN), 1971, vol. 76, no.8, abstract no. 34899j, Columbus, Ohio, US; & SU-A-308 052 (V.A. ORLOV et al.) 01-07-1971 * Abstract * | 1-4,14-15 | |
| X | DATABASE WPI, no. 76-13875X [08], Derwent Publications Ltd, London, GB; & JP-A-51 001 585 (HONEY CHEMICAL IND. K.K.) 08-01-1976 * Abstract * | 1-4 | |
| X | US-A-4 211 824 (S. YOSHIDA et al.) * Claims 1,8 * | 1-4 | |
| P,X | EP-A-0 350 773 (SUMITOMO NAUGATUCK CO.) * Claim 1 * | 1-17 | |

TECHNICAL FIELDS SEARCHED (Int. Cl.5)

C 08 F
C 09 J

The present search report has been drawn up for all claims

| Place of search | Date of completion of the search | Examiner |
|---|---|---|
| THE HAGUE | 13-09-1990 | VAN HUMBEECK F.W.C. |